# EUROPÄISCHE PATENTSCHRIFT

(11) **EP 4 414 568 B1**
(45) Veröffentlichungstag und Bekanntmachung des Hinweises auf die Patenterteilung: **08.07.2026**
(21) Anmeldenummer: 24401005.4
(22) Anmeldetag: 09.02.2024
(51) Int. Cl.: F16B 5/02, B23P 19/10, F16B 19/02, F16B 37/14

(54) **AUFSCHRAUBDORN ZUR AUSRICHTUNG VON MITEINANDER ZU VERSCHRAUBENDEN BAUTEILEN UND VERFAHREN ZUR HERSTELLUNG DER VERBINDUNG VON BAUTEILEN**
SCREWING MANDREL FOR ALIGNING COMPONENTS TO BE SCREWED TO ONE ANOTHER AND METHOD FOR PRODUCING THE CONNECTION OF COMPONENTS
MANDRIN DE VISSAGE POUR ALIGNER DES COMPOSANTS À VISSER ET PROCÉDÉ DE FABRICATION DE LA LIAISON DE COMPOSANTS

(30) Priorität: 10.02.2023 DE 102023201080
(43) Veröffentlichungstag der Anmeldung: 14.08.2024
(73) Patentinhaber: Rühl, Konstantin, 09392 Auerbach / Erz. (DE)
(72) Erfinder: Rühl, Konstantin, 09392 Auerbach / Erz. (DE)
(74) Vertreter: Rumrich, Gabriele

(56) Entgegenhaltungen:
- FR-A- 1 338 898
- US-A- 4 005 629
- US-B2- 9 579 757

## Beschreibung

Die vorliegende Erfindung betrifft einen Aufschraubdorn zur Ausrichtung von miteinander zu verschraubenden Bauteilen, nach dem Patentanspruch 1. Darüber hinaus betrifft die vorliegende Erfindung ein Verfahren zur Herstellung der Verbindung von Bauteilen nach Patentanspruch 10.

Im industriellen Stahlbau, insbesondere im Bereich des Hallenbaus, Kraftwerksbaus, Krananlagenbaus und der Fördertechnik, aber auch in anderen Bereichen des Stahlbaus und generell für Konstruktionen, bei welchen Bauteile miteinander verbunden werden sollen (z.B. auch Messebau, Holzbau usw.), erfolgt das Zusammenfügen von großen Einzelkomponenten über eine Vielzahl von Schraublöchern/Bohrungen. Innerhalb von zwei miteinander zu verbindenden Flächen sind dabei je nach Größe der Einzelkomponenten 10 bis 50 Schraublöcher, teilweise noch mehr, angeordnet, welche zur Montage exakt zueinander fluchtend ausgerichtet werden müssen.

Üblicherweise werden hierzu sogenannte Schlagdorne verwendet, welche einen zylindrischen Längenbereich und einen sich anschließenden Konus aufweisen, wobei jedoch entscheidende Nachteile auftreten. Hinsichtlich der Einschlagtiefe kann der herkömmliche Schlagdorn entweder so weit eingeschlagen werden, dass der Konus des Dorns die Lochleibung ausrichtet, oder über den Konus hinaus. Wird der Schlagdorn nur bis in den Bereich des Konus' eingeschlagen, so verbleibt zwangsläufig ein Restversatz der Bauteile und die Bauteile sind nicht exakt zueinander ausgerichtet. Dies erschwert das Einführen von Schrauben in weitere Schraublöcher. Wird der Schlagdorn bis über den Konus hinaus eingeschlagen, so kann er nur durch Schläge auf die gehärtete Spitze des Dorns wieder entfernt werden, was eine erhebliche Unfallgefahr durch Absplitterung darstellt.

Aus der Druckschrift DE 199 25 045 A1 ist ein Montagebolzen zur Ausrichtung von miteinander zu verschraubenden Bauteilen bekannt. Dabei soll dabei eine Radfelge mit einer Radnabe verschraubt werden. Der Montagebolzen weist dabei in einer Ausführung ein Innengewinde auf, und wird mit dem Innengewinde auf einen Radnabenbolzen geschraubt. Bei der Montage der Radfelge greift dann der Montagebolzen in eine Bohrung der Radfelge ein, so dass diese zur Radnabe ausgerichtet wird. Die Radfelge kann dadurch einfacher auf die Radnabenbolzen aufgesteckt werden. Die zu verbindenden Bauteile weisen hier mehrere Radbolzen an der Radnabe und Bohrungen an der Felge auf und somit keine Bohrungen in den beiden zu verschraubenden Bauteilen, denn die Radnabe weist nämlich bei Verwendung eines Montagebolzens mit Innengewinde keine Bohrungen auf. Ähnlich sind auch die Lösungen nach DE 1 480 863 A und EP 0 609 166 A1 gestaltet. Es wird bei den drei vorgenannten Lösungen keine Schraube in den Montagebolzen eingeschraubt und mit diesem in Bohrungen der Bauteile eingebracht, wobei die Schraube dann in den Bohrungen zur Verbindung der Bauteile verbleibt.

Die EP 3 330 448 A1 offenbart eine Vorrichtung zur Verbindung zweier Bauteile mit einem Dorn und einer ersten Hülse, wobei die erste Hülse randbündig in einem der Bauteile einbettbar und der Dorn mit einem ersten Endabschnitt in diese erste Hülse einsteckbar und mit seinem gegenüberliegenden, zweiten Endabschnitt zum Eingriff in das andere Betonbauteil ausgebildet ist. Dabei ist der Dorn in der ersten Hülse um eine erste Achse drehbar. Die Vorrichtung umfasst weiterhin eine zweite Hülse welche randbündig in dem anderen Bauteil einbettbar ist und in welche der Dorn mit seinem zweiten Endabschnitt in mehreren Drehstellungen bezüglich einer zweiten Achse einsteckbar ist. In wenigstens einer der beiden Hülsen ist der Dorn quer zu seiner jeweiligen Achse verschiebbar. Die zweite Achse ist mit seitlichem Versatz parallel zur ersten Achse ausgerichtet. Dadurch kann ein allfälliger gegenseitiger Versatz der ersten gegenüber der zweiten Hülse durch Drehen und/oder Querverschieben des Dorns ausgeglichen werden.

In der DE 20 2010 000 868 U1 wird eine Verbindungsvorrichtung für den Transport und die Montage von Komponenten von Windkraftanlagen beschrieben. Die Verbindungsvorrichtung weist ein männliches Element und ein korrespondierendes weibliches Element auf, die miteinander verbindbar sind. Weiterhin sind ein Führungselement und ein Aufnahmekörper vorgesehen, wobei das Führungselement einen Führungsstift aufweist, der in eine Öffnung des Aufnahmekörpers einsetzbar ist. Der Führungsstift weist ein Zentrierungselement auf, über das beim Einsetzen des männlichen Elements in das weibliche Element oder umgekehrt die Elemente fluchtend verbunden werden. Durch eine Verriegelung ist eine haltende Verbindung zwischen den Elementen erzeugbar.

In der DE 103 20 189 A1 wird ein Nietelement beschrieben, das aus einem längserstreckten Nietkörper mit annähernd zylindrischer Umfangskontur, mit einem an einem Kopfende des Nietelements angebrachten Nietkopf und einem dem Kopfende gegen-überliegenden freien Ende besteht und dessen freies Ende aus wenigstens zwei Segmenten gebildet ist, zwischen denen sich radial nach außen offene Zwischenräume erstrecken. Die radial nach außen offenen Zwischenräume sind bevorzugt als parallel zur Symmetrieachse des Nietkörpers verlaufende Schlitze in Kreuzschlitzform angeordnet und an ihrem freien Ende in radialer Richtung gegeneinander gedrückt, so dass das Nietelement eine sich auf das freie Ende hin verjüngende konische Umfangskontur aufweist. Dadurch wird ein unkontrolliertes Aufreißen vermieden und ein kontrolliertes Umbiegen des freien Endes des Nietelementes gewährleistet. Außerdem wird aufgrund der Verjüngung das automatische Einsetzen des Nietelements in die Nietlöcher auch dann ermöglicht, wenn diese sich leicht außermittig gegenüberliegen.

Die Druckschrift US 4 005 629 A beschreibt einen Bolzen zur Aufnahme einer Schraube, wobei der Bolzen einen Schaft mit konstantem Querschnitt und eine daran angrenzende Verlängerung mit einer sich verjüngenden Kontur aufweist, wobei sich die Verjüngung der Kontur von einem größeren Durchmesser, der dem Schaftdurchmesser entspricht, zu einem geringeren Durchmesser, der ein leichtes Einführen in die für die Ausrichtung vorgesehenen Bohrungen ermöglicht. Nachteilig ist, dass aufgrund der Bauform des Bolzens das Gewinde der Schraube in das Gewinde des Bolzens eingeschraubt wird. Die Kraftübertragung zum Einschlagen des Bolzens erfolgt über das Gewinde.

Daher weist der Bolzen einen großen Außendurchmesser im Vergleich zum Innendurchmesser zur Aufnahme des Gewindes der Schraube auf. Daher kann mit dem offenbarten Bolzen lediglich eine Passschraube verbaut werden. Alternativ muss eine Hülse in die Bohrungen eingesetzt werden, die den Unterschied in den Abmessungen des Innendurchmessers der Bohrung und des Außendurchmessers der Schraube überbrückt. Für größere Schraubendurchmesser ist ein derartiger Bolzen nicht geeignet.

Ferner ist es bei zu verbindenden Bauteilen, die in unmittelbarer Nähe der Schraubverbindung Steg- oder Anschlussbleche aufweisen, fast unmöglich den Schlagdorn wieder zu entfernen, weil der Platz für ein geeignetes Werkzeug fehlt.

Schließlich sind herkömmliche konische Schlagdorne auch ungeeignet zur Verbindung von drei oder mehr Bauteilen, da keine ordnungsgemäße Ausrichtung der Teile zueinander hergestellt werden kann.

Der Erfindung liegt somit die Aufgabe zugrunde, einen Aufschraubdorn zur Ausrichtung von miteinander zu verschraubenden Bauteilen zur Verfügung zu stellen, welcher eine optimale Ausrichtung der Bauteile erlaubt und gleichzeitig mit geringem Aufwand wieder zu entfernen ist. Ferner ist es Aufgabe der Erfindung, ein Verfahren zur Ausrichtung und zur Verbindung von miteinander zu verschraubenden Bauteilen zur Verfügung zu stellen, welches bei optimaler Ausrichtung der Bauteile einen geringen Arbeitsaufwand erfordert.

Die Aufgabe wird vorrichtungsseitig durch die Merkmale des unabhängigen Patentanspruchs 1 und verfahrensseitig durch die Merkmale des unabhängigen Patentanspruchs 10 gelöst. Weitere zweckmäßige Ausgestaltungen der Erfindung sind Gegenstand der abhängigen Patentansprüche.

Der erfindungsgemäße Aufschraubdorn zur Ausrichtung von miteinander zu verschraubenden Bauteilen die Bohrungen aufweisen und zum Einbringen einer Schraube in die Bohrungen weist dabei einen sich über einen ersten Längenbereich erstreckenden Schaft auf, welcher im Wesentlichen zylindrisch ausgebildet ist sowie einen sich an den Schaft anschließenden, über einen zweiten Längenbereich erstreckenden Konus, wobei der Schaft einen Innenraum aufweist, welcher zu einer dem Konus gegenüberliegenden Stirnseite des Schaftes hin geöffnet ausgebildet ist und wobei der Innenraum ausgehend von der Stirnseite des Schaftes ein Innengewinde und eine Anschlagsfläche aufweist, wobei die Anschlagfläche in Richtung zur Stirnseite in Form einer mittigen Wölbung ausgebildet ist. Der Aufschraubdorn ist dazu mit der in diesen bis zur Anschlagfläche eingeschraubten Schraube in hintereinander liegende Bohrungen der hintereinander liegenden Bauteile einbringbar. Die Wölbung der Anschlagfläche ist dabei mittig zur Schraube ausgerichtet.

Der Aufschraubdorn weist einen Außendurchmesser auf, der mit einem Durchmesser der Bohrungen in den Bauteilen korrespondiert.

Dabei ist der Aufschraubdorn mittels der in diesen eingeschraubten Schraube durch die Bohrungen führbar, z.B. durch Krafteinwirkung auf den Schraubenkopf in Richtung zum Aufschraubdorn durch Einschlagen oder Einpressen, und nach vollständigem Hindurchführen von der Schraube abschraubbar.

Die Schraube verbleibt dann in den Bohrungen und wird mittels einer Mutter und ggf. einer Unterlegscheibe versehen und mit diesen verschraubt und dadurch die Bauteile auch an dieser Verbindungsposition miteinander verbunden.

Um das Ein- bzw. Durchführen des Aufschraubdorns in / durch die Durchgangslöcher/Bohrungen der Bauteile zu gewährleisten, ist der Außendurchmesser des Schaftes des Aufschraubdorns bevorzugt 0,2 mm (zwei zehntel) bis 0,6 mm (sechs zehntel), insbesondere 0,3 mm bis 0,5 mm kleiner als der Innendurchmesser (nicht bezeichnet) der Durchgangslöcher/Bohrungen der Bauteile.

Bevorzugt ist der Außendurchmesser des Aufschraubdorns in dem ersten Längenbereich größer als in dem zweiten Längenbereich.

In das Innengewinde des Schaftes ist eine Schraube eingeschraubt, welche mit dem Innengewinde eine Wirkverbindung eingeht. Die Schraube ist bis zu einer Anschlagsfläche des Innenraums eingeschraubt. Zur Ausrichtung zweier Bauteile kann der erfindungsgemäße Aufschraubdorn mit in den Innenraum eingeführter Schraube mit seinem Konus in zwei übereinanderliegende Schraublöcher der Bauteile eingeführt werden. Bei weiterer Druckausübung auf die Schraube in axialer Richtung, beispielsweise durch Hämmern oder Schieben, wird der Druck über die Anschlagsfläche aufgenommen. Das Innengewinde bleibt von der Druckausübung unbeeinflusst. Die Druckausübung in axialer Richtung führt zu einem weiteren Einführen des Aufschraubdorns in die Bohrlöcher bis der zweite Längenbereich des Aufschraubdorns in einer Ebene mit den Bohrlöchern der zu verbindenden Bauteile liegt und diese deckungsgleich zueinander ausrichtet.

Vorteilhafterweise kann der erfindungsgemäße Aufschraubdorn nach erfolgter Verbindung der Bauteile über die anderen Schraublöcher einfach wieder entfernt werden, indem er von der in seinem Innenraum befindlichen Schraube abgeschraubt wird, wobei die Schraube in dem Bohrloch verbleibt. Der Aufschraubdorn wird also nicht, wie bisher üblich, in die gleiche Richtung entfernt, aus der er eingeführt wurde, sondern indem er weiter durch die Bohrlöcher geführt wird, bis er an deren gegenüberliegenden Seite wieder austritt.

Die Anschlagsfläche kann geschlossen ausgebildet sein, oder an einem oder mehreren in dem Innenraum des Aufschraubdorns angeordneten Vorsprüngen ausgebildet sein.

Bevorzugt erstreckt sich das Innengewinde über eine Länge, die wenigstens dem 1,2-fachen des Durchmessers des Innengewindes entspricht.

Insbesondere entspricht die Länge des Innengewindes der Mindesteinschraubtiefe von Schrauben der Festigkeitsklasse 10.9. in Stahl mittlerer Festigkeit (zum Beispiel E295) ≙ 1,2 x d (vgl. VDI Richtlinie 2230); dabei ist d der Nenndurchmesser.

Der erfindungsgemäße Aufschraubdorn kann auch für die Verwendung von Schrauben anderer Festigkeitsklassen ausgebildet sein, wobei die Mindesteinschraubtiefe der jeweiligen Schrauben berücksichtigt und die Länge des Innengewindes entsprechend angepasst ist.

Gemäß der Erfindung weist der Innenraum des Aufschraubdorns einen Freistich auf, welcher direkt angrenzend zu dem Innengewinde und an dem der Stirnseite des Schaftes gegenüberliegenden Ende des Innengewindes ausgebildet ist.

In einer bevorzugten Ausführungsform liegt der Außendurchmesser des Schaftes im Bereich des 1,07-fachen bis 1,1-fachen, bevorzugt im Bereich des 1,08-fachen bis 1,09-fachen des Durchmessers des Innengewindes. Es hat sich gezeigt, dass eine solche Ausgestaltung des Schaftes eine optimale Stabilität aufweist, wobei der Außendurchmesser des Schaftes selbstverständlich nur so groß sein darf, dass eine in dem Aufschraubdorn eingeschraubte Schraube zur passgenauen Verbindung der Bohrlöcher auch dann noch geeignet ist, wenn der Aufschraubdorn bereits entfernt wurde.

Vorteilhafterweise weist der Schaft einen von dem Innenraum beabstandeten massiven Bereich auf, in welchem der Schaft über seinen gesamten Querschnitt hinweg massiv ausgebildet ist und wobei in dem massiven Bereich ein Punkt der optimalen Einführtiefe des Aufschraubdorns angeordnet ist.

Unter "Punkt der optimalen Einführtiefe" wird auch der "Umfang der optimalen Einführtiefe" oder der "optimale Druckpunkt" verstanden, wobei damit auch die komplette Ebene des Querschnitts des Aufschraubdorns an dieser Stelle bezeichnet wird.

Wird der Aufschraubdorn bis zum optimalen Druckpunkt in zwei miteinander zu verbindende Bohrlöcher eingeführt - wobei das Einführen zumindest so weit erfolgt, dass der Punkt der optimalen Einführtiefe mit einer Grenzfläche des Bauteils in einer Ebene liegt, wobei die Grenzfläche an die das Bauteil umgebende Umwelt, oder an das zweite auszurichtende Bauteil angrenzt - so werden diese Bohrlöcher exakt zueinander ausgerichtet, was bedeutet, dass sie deckungsgleich zueinander liegen.

Der optimale Druckpunkt kann auch bis in eine Ebene eingeführt werden, welche im Bereich der Tiefe eines Bohrlochs liegt. Vorzugsweise erfolgt das Einführen bis an die Grenzfläche zweier miteinander zu verbindender Bauteile.

Es ist bevorzugt vorgesehen, dass der optimale Druckpunkt in dem massiven Bereich des Aufschraubdorns angeordnet ist.

Vorteilhafterweise weist der Aufschraubdorn in diesem Bereich über seinen Querschnitt hinweg die größte Stabilität auf, was ihn gegen eine Kompression in radialer Richtung stabilisiert, die beispielsweise über den Querschnitt der Bohrlöcher hinweg ausgeübt werden könnte.

Der optimale Druckpunkt ist idealerweise sowohl vom Konus des Schafts als auch von der Stirnseite des ersten Längenbereiches beziehungsweise von einer im ersten Längenbereich angeordneten Schlüsselfläche gleich weit entfernt und/oder so weit entfernt, dass es nicht zum Abrutschen des Aufschraubdorns aus der Bohrung/Durchgangsloch in einen dieser Bereiche (Konus, Schlüsselfläche, Stirnseite) kommt.

Der optimale Druckpunkt selbst kann vorteilhafterweise optisch markiert sein.

In einer bevorzugten Ausführungsform weist der Aufschraubdorn an seiner Außenseite wenigstens zwei Markierungen auf, welche den Abstand zu dem Punkt der optimalen Einführtiefe des Aufschraubdorns anzeigen. Die Markierungen können dabei am Konus oder in dem ersten Längenbereich angeordnet sein, wobei eine Markierung am Konus bevorzugt wird. Beispielsweise kann im Abstand von 20 mm, 30 mm, 40 mm, 50 mm und/oder 60 mm zum optimalen Druckpunkt durch eine entsprechende Zahl und einen quer zur Einführrichtung des Aufschraubdorns angeordnete Markierung der jeweilige Abstand in mm zum optimalen Druckpunkt angegeben werden, sodass beim Durchtreten des Konus' aus dem Bohrloch die entsprechenden Markierungen nach und nach sichtbar werden und dem Nutzer anzeigen, wie weit der Aufschraubdorn noch eingeführt werden sollte. Auch der Punkt der optimalen Einführtiefe selbst kann an der Außenseite des Schaftes markiert sein.

Es kann weiterhin vorgesehen sein, dass der Schaft an seiner Außenseite wenigstens eine Schlüsselfläche aufweist. Vorteilhafterweise dient eine solche Schlüsselfläche dem Eingreifen eines Werkzeuges, beispielsweise eines Maulschlüssels, zum Lösen beziehungsweise Abschrauben des Aufschraubdorns von einer eingesetzten Schraube im montierten Zustand.

Es können mehrere unterschiedlich ausgebildete Schlüsselflächen für das Eingreifen unterschiedlicher Werkzeuge vorgesehen sein.

Vorteilhafterweise ist die wenigstens eine Schlüsselfläche in dem massiv ausgebildeten Bereich des Aufschraubdorns, also beabstandet von dem das Innengewinde aufweisenden Bereich ausgebildet, um eine Druckausübung auf den Innenraum des Aufschraubdorns in radialer Richtung durch das verwendete Werkzeug zu vermeiden.

Bevorzugt ist der Aufschraubdorn aus Metall oder einer Metalllegierung, besonders bevorzugt aus einer Stahllegierung gefertigt. Insbesondere ist der Aufschraubdorn aus einer zähelastischen Stahllegierung gefertigt.

Der Aufschraubdorn sollte vorzugsweise aus 42CrM04 oder aber auch 20MnCr5 bzw. 34CrAlMo5-10 (alternativ vergleichbaren Werkzeugstählen) sein.

Die Aufgabe wird weiterhin gelöst durch ein Verfahren zur Verbindung von Stahlbauteilen unter Verwendung von wenigstens eines erfindungsgemäßen Aufschraubdorns, aufweisend die Schritte gemäß dem Anspruch 10.

Dabei können die Schritte a) und b) in beliebiger Reihenfolge erfolgen, das heißt es kann zunächst das Einschrauben einer Schraube in einen Aufschraubdorn und anschließend das Einführen des Aufschraubdorns mit eingeschraubter Schraube in ein Bohrloch erfolgen, oder es erfolgt alternativ zunächst das Einführen eines (leeren) Aufschraubdorns in ein Bohrloch und ein anschließendes Einschrauben einer Schraube in den im Bohrloch befindlichen Aufschraubdorn. Bevorzugt wird eine Ausführungsform, in der Schritt a) vor Schritt b) erfolgt.

Bevorzugt werden zwei Aufschraubdorne zur Ausrichtung der Bauteile verwendet.

Vorzugsweise werden die Aufschraubdorne gemäß Schritt b) in die Bohrlöcher derart weit eingeführt, dass der jeweilige Bereich der optimalen Einführtiefe / der Bereich des optimalen Druckpunktes innerhalb der Bohrungen der Bauteile angeordnet ist. Dadurch wird die Querschnittsfläche des Bohrlochs optimal ausgefüllt und die zwei zu verbindenden Bohrlöcher werden deckungsgleich übereinander ausgerichtet.

Durch die deckungsgleiche Ausrichtung der Bohrlöcher, in welche die Aufschraubdorne eingeführt wurden, sind auch andere Bohrlöcher der zu verbindenden Bauteile deckungsgleich zueinander ausgerichtet und müssen mittels Schrauben verbunden werden. Im Anschluss daran werden die Aufschraubdorne gemäß Schritt d) über den Punkt der optimalen Einführtiefe hinaus weiter eingeführt, sodass sie von der der Einführseite der Bauteile gegenüberliegenden Seite aus entfernt werden können.

Gemäß einer bevorzugten Ausführungsform werden die Aufschraubdorne in Schritt d) derart weit eingeführt, dass eine an der Außenseite des Schaftes angeordnete Schlüsselfläche auf der der Einführseite der Bauteile gegenüberliegenden Seite der zu verbindenden Bauteile aus dem Bohrloch / den Bohrlöchern austritt. Die Schlüsselfläche ist dadurch für ein Werkzeug, beispielsweise einen Maulschlüssel, erreichbar, welches an der Schlüsselfläche angreifen und den Aufschraubdorn von der im Bohrloch befindlichen Schraube abschrauben kann.

Alternativ werden die Aufschraubdorne in Schritt d) derart weit eingeführt, dass ein Nutzer den jeweiligen Aufschraubdorn ergreifen und manuell von der im Bohrloch befindlichen Schraube abschrauben kann.

Bevorzugt erfolgt das vollständige Einführen der Schraube in die Bohrlöcher während des Schrittes d), alternativ im Anschluss an Schritt e) des erfindungsgemäßen Verfahrens.

Vorteilhafterweise vereinfacht der erfindungsgemäße Aufschraubdorn das Zusammenfügen von Stahlbauteilen um ein Vielfaches. Da das Wiederausschlagen eines herkömmlichen Domes entfällt, spart man mindestens zwei Arbeitsgänge pro Anschluss. Der erfindungsgemäße Aufschraubdorn kann einfach wieder von der vollständig eingebrachten Schraube abgeschraubt werden, was aufgrund der kompakten Größe auch bei miteinander zu verbindenden Bauteilen funktioniert, welche Rippen und/oder Anschlussbleche in direkter Nähe zur Verbindungsstelle aufweisen.

Bei fachgerechter Anwendung kann eine Scherwirkung auf die Schrauben ausgeschlossen werden.

Die durch den erfindungsgemäßen Aufschraubdorn und das erfindungsgemäße Verfahren erhöhte Montageproduktivität führt zu einer Senkung der Montagekosten, da die kostenintensive Einsatzdauer von Kränen, wie beispielsweise im Windenergieanlagenbau oder im Brückenbau, verkürzt werden kann.

Teure Passschrauben und die Herstellung von Bauteilen mit Passschafttolleranzen werden durch die vorgeschlagene Lösung ersetzt.

Bei verzinkten Schrauben wird der Korrosionsschutz des unverzinkten Muttergewindes durch den Zinküberzug des Schraubenbolzens (durch kathodischen Korrosionsschutz) durch die Verwendung des erfindungsgemäßen Aufschraubdorns nicht beeinträchtigt.

Schließlich erlaubt der erfindungsgemäße Aufschraubdorn durch die Ausnutzung des Bohrlochdurchmessers eine exakte Ausrichtung der Bohrlöcher zueinander, auch bei der Verbindung von drei oder mehr hintereinander liegenden Bauteilen.

Die Erfindung wird nachfolgend anhand von Ausführungsbeispielen und zugehörigen Figuren näher erläutert, ohne dabei auf diese beschränkt zu sein.

Es zeigen:
- Figur 1: eine schematische Darstellung eines erfindungsgemäßen Aufschraubdorns mit angeschnittenem Schaft; und
- Figur 2: ein erfindungsgemäßer Aufschraubdorn mit eingeschraubter Schraube in einem Bohrloch.
- Figur 3: Ausrichtung von zwei plattenförmigen Bauteilen 6.1 zur Verbindung zweier ebener Bauteile 6, die auf Stoß aneinander liegen,
- Figur 4: Teilschnitt eines Aufschraubdorns 1 mit eingeschraubter Schraube 8 in den Bohrungen 7 zweier aneinander anliegender Bauteile 6
- Figur 5: Ausrichtung zweier zu verbindender Bauteile 6 unter Verwendung von zwei Aufschraubdornen 1 mit eingeschraubten Schrauben 8,
- Figur 6: Längsschnitt durch zwei Bauteile 6 mit in Bohrungen 7 eingebrachten Aufschraubdormen 1 und dazwischen hergestellten Schraubverbindungen.

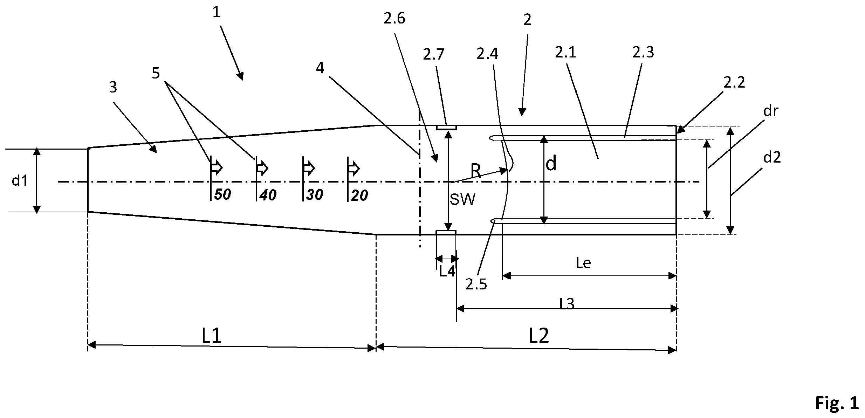

**Figur 1** zeigt eine schematische Darstellung eines erfindungsgemäßen Aufschraubdorns 1, welcher einen Konus 3 mit einer Länge L1 und einem kleinsten Durchmesser d1 und einen sich an den Konus 3 anschließenden zylindrischen Schaft 2 mit einer Länge L2 und einem Außendurchmesser d2 aufweist.

Der Schaft 2 ist in der gezeigten Ausführungsform im Längsschnitt dargestellt. Der Schaft 2 weist einen Innenraum 2.1 auf, welcher zu einer Stirnseite 2.2 des Schaftes 2 hin geöffnet ausgebildet ist und welcher der Aufnahme einer Schraube dient. Zu diesem Zweck weist der Innenraum 2.1 ein Innengewinde 2.3 mit einem Innendurchmesser dr und einem Nenndurchmesser d auf, der dem Außengewinde der hier nicht dargestellten Schraube entspricht.

An das Innengewinde 2.3 anschließend ist ein Freistich 2.5 und eine an den Freistich 2.5 angrenzende Anschlagsfläche 2.4 vorgesehen. Die Anschlagfläche 2.4 ist in Richtung zur Stirnseite 2.2 in Form einer Erhebung ausgebildet, hier mit einem Radius R.

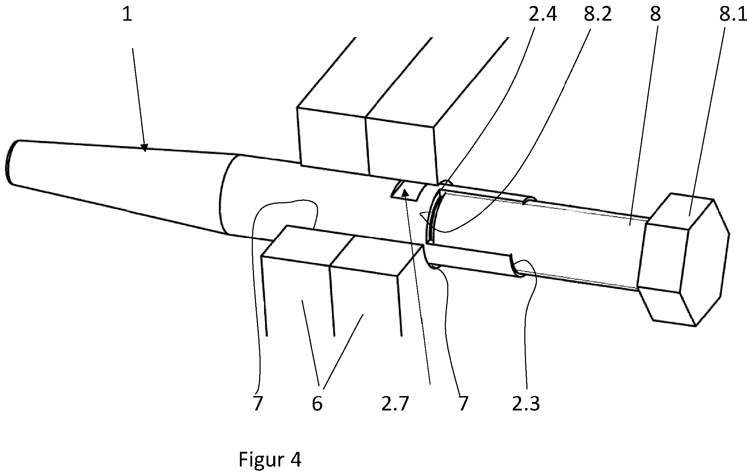

Die Anschlagsfläche 2.4 dient als Anschlag für eine in das Innengewinde 2.3 eingeführte Schraube. Die Schraube (hier nicht dargestellt), liegt nach dem Einschrauben mit ihrer Stirnseite 8.2 (siehe Figur 4) im Wesentlichen zentrisch an der Anschlagfläche 2.4 an. Dadurch nimmt die Schraube über ihre Stirnseite Kräfte auf, die in axialer Richtung auf die Schraube ausgeübt werden.

Die Kraftübertragung beim Einschlagen/Einpressen von der hier nicht dargestellten Schraube auf den Aufschraubdorn 1 erfolgt somit ausschließlich über den vorgesehenen Radius R der Anschlagsfläche 2.4 mit einer Wölbung mittig der nicht dargestellten Schraube.

Alternativ kann die Anschlagfläche 2.4 auch anderweitig ballig in Richtung zur Schraube ausgebildet sein.

Es erfolgt keinerlei Kraftübertragung über die Gewindeflanken sowie keinerlei Verformung der Schraube.

Der Außendurchmesser d2 des Schaftes 2 ist nur geringfügig größer als der Nenndurchmesser d des Innengewindes 2.3. Bevorzugt entspricht der Außendurchmesser d2 des Schaftes 2 dem 1,08-fachen des Durchmessers d des Innengewindes 2.3. Dies führt vorteilhafterweise dazu, dass eine Schraube problemlos sowohl in das Innengewinde 2.3 als auch in die eigentliche Bohrung (nach Entfernung des Aufschraubdorns 1) greifen kann und das Spiel zwischen dem Bohrungsdurchmesser der Bohrungen in den Bauteilen (nicht dargestellt) und des Außendurchmessers der Schraube gering ist.

Da alle anderen Verbindungspositionen der Bauteile bereits mittels der Verbindungselemente (Schrauben und Muttern) verbunden sind, tritt keinerlei Scherwirkung auf die zuletzt zu verschraubenden Verbindungspositionen, in welchen vorher der Aufschraubdorn positioniert war, nach dessen Entfernen auf, wenn die Schraube durch die Bohrungen greift und diese dann mittels Muttern befestigt wird.

Die Länge des Innengewindes 2.3 entspricht vorzugsweise der Mindesteinschraubtiefe von Schrauben der Festigkeitsklasse 10.9. in Stahl der mittleren Festigkeit (zum Beispiel E295) = 1,2 x d (Vgl. hierzu VDI Richtlinie 230).

Der Schaft 2 weist einen massivem Bereich 2.6 auf. In diesem massiven Bereich 2.6 ist ein Bereich der optimalen Einführtiefe 4 des Aufschraubdorns 1 vorgesehen, bis zu welchem der Aufschraubdorn 1 vorteilhafterweise in die Bohrungen eingeführt wird.

Befindet sich der Aufschraubdorn 1 bis zu diesem Bereich der optimalen Einführtiefe in den Bohrungen der Bauteile ist gewährleistet, dass die Bohrungen zueinander fluchten, da die Bohrungen über den Außendurchmesser d2 des Schaftes 2 des Aufschraubdorns 1 in dessen zylindrischem Bereich zueinander zentriert werden.

Ebenfalls in dem massiven Bereich 2.6 ist bevorzugt zumindest eine Schlüsselfläche 2.7 an der Außenseite des Schaftes 2 angeordnet. Die Schlüsselfläche 2.7 ist in einem Abstand L3 von der Stirnseite 2.2 des Schaftes 2 angeordnet und weist eine Breite L4 und eine Schlüsselweite SW auf. Wenn die zu verbindenden Bauteile mit einer Vielzahl von Schrauben verbunden sind und der Aufschraubdorn 1 zu entfernen ist, so wird der Aufschraubdorn 1 zunächst soweit durch die Bohrungen der Bauteile hindurch gesteckt, dass die an der Außenseite des Schaftes 2 angeordnete Schlüsselfläche 2.7 auf der der Einführseite der Bauteile gegenüberliegenden Seite der zu verbindenden Bauteile aus den Bohrungen austritt. Anschließend kann der Aufschraubdorn 1 an der Schlüsselfläche 2.7 durch ein geeignetes Werkzeug, z.B. einen Maulschlüssel von der in den Bohrungen befindlichen Schraube abgeschraubt werden.

Um dem Nutzer das Abschätzen der Einschlagtiefe zu erleichtern sind an der Außenseite des Konus 3 mehrere Markierungen 5 angebracht, die den jeweiligen Abstand der Markierung 5 zum Punkt der optimalen Einschlagtiefe 4, im dargestellten Ausführungsbeispiel in mm angegeben, kennzeichnen.

Nachfolgend wird in Tabelle 1 die bevorzugte Maßtabelle des Aufschraubdorns für Schrauben mit Gewinde mit einem Nennmaß von M20 bis M72 und Durchgangslöchern DIN EN 20273 der Reihe mittel dargestellt. Dabei handelt es sich um nicht tolerierte Maße nach Allgemeintoleranz ISO 2768-mk:

**Tabelle 1:**

| **Nennmaß** | **d** | **d1 (Ø)** | **d2 (Ø+-0,02)** | **dr** | **Le** | **R** | **L1** | **L2** | **L3** | **L4** | **SW (+0/- 0,2)** | **Gesamtlänge (L1+L2)** |
|---|---|---|---|---|---|---|---|---|---|---|---|---|
| **M20** | 20 | 15 | 21,7 | 12 | 24 | 24 | 75 | 75 | 29 | 12,5 | 19 | 150 |
| **M24** | 24 | 18 | 25,7 | 14,4 | 28,8 | 28,8 | 89 | 90 | 33,8 | 15,0 | 22 | 179 |
| **M27** | 27 | 21 | 29,7 | 16,2 | 32,4 | 32,4 | 102 | 100 | 37,4 | 17,0 | 27 | 202 |
| **M30** | 30 | 23 | 32,7 | 18 | 36 | 36 | 113 | 112,5 | 41 | 18,7 | 27 | 225,5 |
| **M36** | 36 | 27 | 38,7 | 21,6 | 43,2 | 43,2 | 133 | 130 | 48,2 | 22,5 | 32 | 263 |
| **M39** | 39 | 29 | 41,7 | 23,4 | 46,8 | 46,8 | 144 | 135 | 51,8 | 25,0 | 36 | 279 |
| **M42** | 42 | 31 | 44,7 | 25,2 | 50,4 | 50,4 | 154 | 141 | 55,4 | 26,0 | 41 | 295 |
| **M45** | 45 | 33 | 47,5 | 27 | 54 | 54 | 164 | 147 | 59 | 28,0 | 41 | 311 |
| **M48** | 48 | 36 | 51,5 | 28,8 | 57,6 | 57,6 | 174 | 153 | 62,6 | 30,0 | 46 | 327 |
| **M56** | 56 | 41 | 61,5 | 33,6 | 67,2 | 67,2 | 202 | 167 | 72,2 | 35,0 | 55 | 369 |
| **M64** | 64 | 47 | 69,5 | 38,4 | 76,8 | 76,8 | 229 | 181 | 81,8 | 40,0 | 60 | 410 |
| **M72** | 72 | 52 | 77,5 | 43,2 | 86,4 | 86,4 | 257 | 196 | 91,4 | 45,0 | 65 | 453 |

Der erfindungsgemäße Aufschraubdorn ist auch anwendbar bei Fällen mit abgemindertem Nennlochspiel für normale runde Löcher, z.B. Türme oder Masten. Hierbei muss jedoch bevorzugt ein maßlich angepasster Aufschraubdorn verwendet werden, bei dem d2 nur das bevorzugt 1,03-fache von d entspricht (siehe auch DIN EN 20273 Durchgangslöcher für Schrauben).

Der Durchmesser d2 kann eine Toleranz von +/-0,02 mm aufweisen, die Schlüsselweite SW von +0/-0,2 mm. Die nicht bezeichnete Gesamtlänge des Aufschraubdorns ergibt sich aus der Länge L1+L2.

Selbstverständlich kann der Aufschraubdorn 1 beispielsweise auch für geringere Nenndurchmesser, z.B. ab M8 oder ggf. auch kleiner aber auch für noch größere Nenndurchmesser als in den Tabellen 1 und 2 angegeben, eingesetzt werden.

Das Innengewinde des Aufschraubdorns 1 sowie dessen weitere Abmessungen werden dann entsprechend angepasst.

Weiterhin liegt der Außendurchmesser d2 des Schaftes 2 des Aufschraubdorns 1 vorteilhafter Weise etwas unter dem nicht bezeichneten Innendurchmesser der Bohrungen 7, bevorzugt 2/10 (zwei zehntel) bis 6/10 (sechs zehntel), insbesondere 3/10 bis 5/10 unter dem Innendurchmesser (nicht bezeichnet) der Durchgangslöcher/Bohrungen 7 der Bauteile 6.

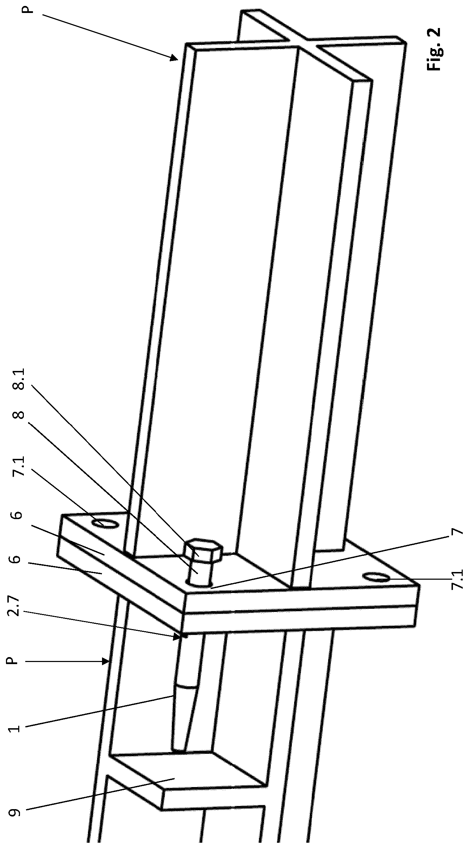

**Figur 2** zeigt einen erfindungsgemäßen Aufschraubdorn 1 mit eingeschraubter Schraube 8. Der Aufschraubdorn 1 greift durch zwei hintereinander liegende Bohrungen 7 von zwei aneinander flach anliegenden Bauteilen 6, die an jeweils einem Profil P endseitig angeordnet sind. Durch das Hindurchgreifen des Aufschraubdorns 1 durch die Bohrungen 7 wurden die zwei Bauteile 6 zueinander ausrichtet und können nun so relativ zueinander gedreht werden, bis ihre Bohrungen 7 fluchten.

Die Bohrungen 7 und somit die Bauteile 6 sind dann wie dargestellt deckungsgleich zueinander ausgerichtet. In unmittelbarer Nähe zum Aufschraubdorn 1 befindet sich hier ein Stegblech 9, das bei Verwendung eines herkömmlichen Schlagdorns hinderlich wäre. Der erfindungsgemäße Aufschraubdorn 1 kann jedoch trotz des Stegblechs 9 problemlos entfernt werden, sobald die Schraube 8 vollständig eingeführt ist.

Die Schlüsselfläche 2.7 ist nach entsprechendem Durchdrücken der Schraube 8 mit dem Aufschraubdorn 1 frei zugänglich, so dass der Aufschraubdorn 1 nun von der Schraube 8 entfernt werden kann. Vor dem Entfernen des Aufschraubdorns werden die anderen Durchbrüche mit hier nicht dargestellten Schrauben und Muttern fixiert.

Die Schraube 8 mit dem Aufschraubdorn 1 kann zum Entfernen des Aufschraubdorns 1 auch soweit eingebracht werden, dass deren Kopf 8.1 an dem Bauteil 6 anliegt. Nach dem Abschrauben des Aufschraubdorns wird eine Mutter auf das Gewinde der Schraube 8 geschraubt und angezogen.

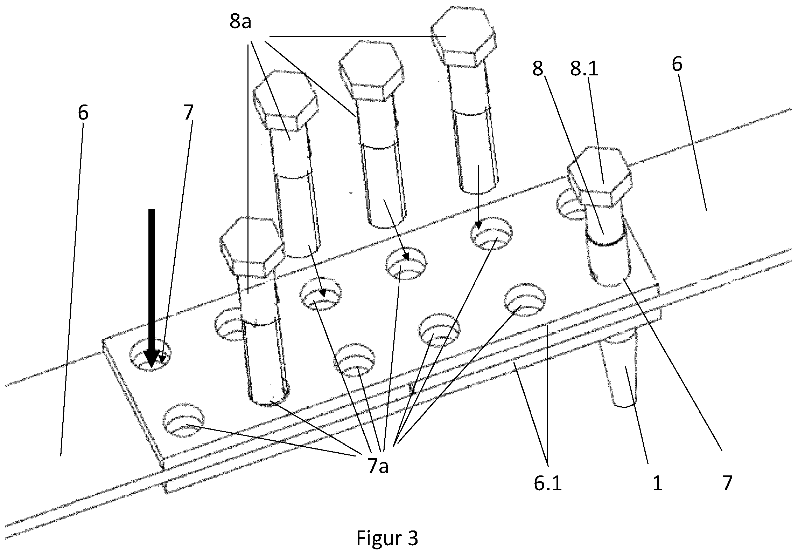

In **Figur 3** sollen zwei auf stoß anliegende flache Bauteile 6 mittels zweier beidseitig überlappend angeordneter plattenförmiger Bauteile 6.1 miteinander verbunden werden. Die Bauteile 6 und die plattenförmigen Bauteile 6.1 weisen in gleichem Lochabstand eingebrachte Bohrungen 7 auf. Durch Bohrungen 7 von jeweils zwei plattenförmige Bauteile 6.1 und einen dazwischen liegenden Bauteil 6 greift ein Aufschraubdorn 7 mit einer eingeschraubten Schraube 8. Ein weiterer einzubringender Aufschraubdorn wird durch einen dicken Pfeil angedeutet. Nach Einbringen der Aufschraubdorne sind auch die anderen Bohrungen zueinander fluchten ausgerichtet. Durch die weiteren Bohrungen 6 werden Schrauben (nicht dargestellt) eingebracht und mit ebenfalls nicht dargestellter Muttern verschraubt. Danach sind alle Bauteile 6, 6.1 miteinander verbunden. Nun werden die Aufschraubdorne soweit hindurchgedrückt bzw. geschlagen, bis deren Schlüsselflächen freiliegen und diese nun von den Schrauben 8 abgeschraubt. Die nun durch alle Bauteile 6, 6.1 greifenden Schrauben 8 werden anschließend ebenfalls mittels Muttern (nicht dargestellt) gesichert.

Der Teilschnitt eines Aufschraubdorns 1 mit eingeschraubter Schraube 8 und Positionierung des Aufschraubdorns in den Bohrungen 7 zweier aneinander anliegender Bauteile 6 ist in **Figur 4** dargestellt.

Die beiden Bauteile 6 wurden mittels des Aufschraubdorns 1 zueinander ausgerichtet. Der Aufschraubdorn 1 befindet sich mit seiner Schlüsselfläche 2.7 innerhalb der Bohrungen 7. Erst wenn der Aufschraubdorn 1 soweit eingebracht wurde, dass dessen Schlüsselfläche außerhalb liegt, kann dieser abgeschraubt werden.

Es ist möglich, die Schraube 8 soweit einzubringen, dass deren Kopf 8.1 an den angrenzenden Bauteil 6 anliegt und erst dann den Aufschraubdorn zu entfernen.

Die Schraube 8 wurde soweit in die Gewindebohrung/das Innengewinde 2.3 des Aufschraubdorns 1 eingeschraubt, bis deren Stirnseite 8.2 an der Anschlagsfläche 2.4 des Aufschraubdorns 1 anliegt.

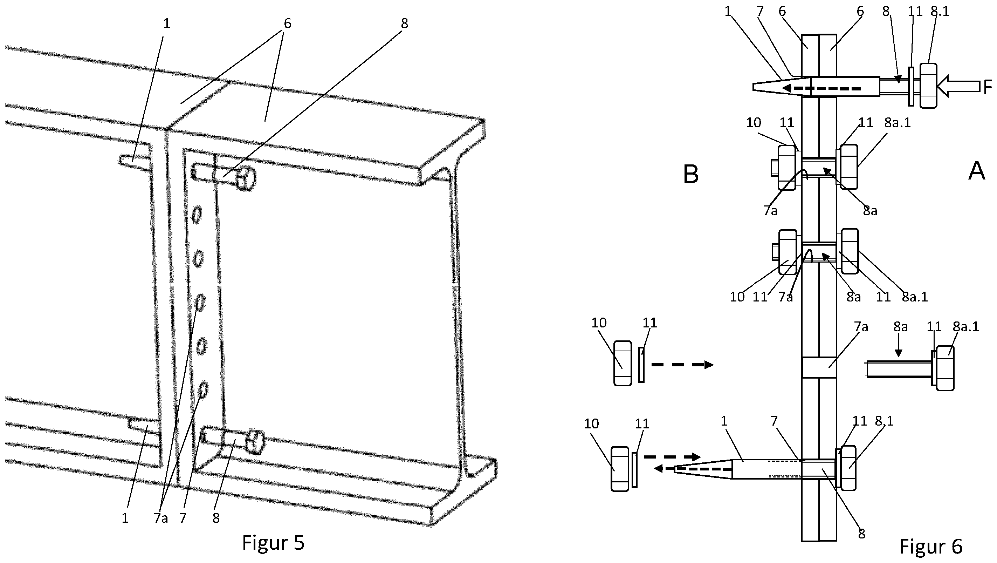

Die Ausrichtung zweier zu verbindender Bauteile 6 unter Verwendung von zwei Aufschraubdornen 1 mit eingeschraubten Schrauben 8 wird in **Figur 5** dargestellt.

Nachdem die beiden Aufschraubdorne 1 die beiden Bauteile 6 zueinander ausgerichtet haben können in die hier noch freien weiteren Bohrungen 7a die weiteren hier nicht dargestellten Schrauben eingesetzt und mittels Muttern angezogen werden, so dass beide Bauteile 6 miteinander verbunden sind. Auch hier werden nun die Aufschraubdorne 1 mit den Schrauben 8 weiter durchgeschlagen, die Aufschraubdorne 1 von den Schrauben 8 abgeschraubt und die Schrauben 8 mit Muttern (nicht dargestellt) verschraubt.

**Figur 6** zeigt einen Längsschnitt durch zwei Bauteile 6, die aneinander anliegen und mit hintereinander liegenden und fluchtenden Bohrungen 7 und 7a versehen sind. Es ist bei den oberen Bohrungen 7 schematisch dargestellt, dass ein Aufschraubdorn 1, in den eine Schraube 8 eingeschraubt ist, mittels einer auf den Schraubenkopf 8.1 wirkenden Kraft F in die Bohrungen 7 eingebracht wurde, so dass der zylindrische Bereich des Schaftes des Aufschraubdorns 1 in beiden Bohrungen 7 der Bauteile 6 sitzt. Es wurde hier eine Unterlegscheibe 11 unter dem Kopf 8.1 der Schaube 8 auf dem Schraubenschaft positioniert.

In den beiden darunter liegenden Positionen wurden bereits in weitere Bohrungen 7a weitere Schrauben 8a eingebracht und mittels Muttern 10 verschraubt. An den Bauteilen 6 liegen dabei Unterlegscheiben 11an.

An der darunter liegenden Position ist beispielhaft dargestellt, dass die beiden Bauteile 6 noch freie weitere Bohrungen 7a aufweisen, und mit einer weiteren Schraube 8a mit Unterlegscheibe 11 sowie einer Mutter 10 und Unterlegscheibe 11 verschreibt werden sollen. Dazu wird die weitere Schraube 8a durch die Bohrungen 7a geführt, wobei eine Unterlegscheibe 11 sich unter dem Schraubenkopf 8a.1 der weiteren Schraube 8a befindet. Über den Bereich des Schaftes der weiteren Schraube 8a, der durch die Bohrungen 7a greift, wird die zweite Unterlegscheibe 11 positionier und dann die Mutter 10 aufgeschraubt und angezogen.

Bevorzugt wenn in alle oder nahezu alle weiteren Bohrungen 7a weitere Schrauben 8a eingebracht und mittels Muttern 10 angezogen wurden, werden die Aufschraubdorne 1 weiter eingeschlagen, so dass diese sich nun außerhalb der Bohrungen 7 befinden, wie es hier bei dem unteren Aufschraubdorn 1 dargestellt ist. Dieser kann nun von der Schraube 8 geschraubt werden. Jetzt wird auf die mittels des Aufschraubdorns 1 in die Bohrungen 7 eingebrachte Schraube 8 eine Mutter 10 auf die Schraube geschraubt und angezogen. Wie angedeutet können auch hier Unterlegscheiben 11 zwischen den Bauteilen 6 und den Schraubenkopf 8.1 und der Mutter 10 angeordnet sein.

In Figur 6 wurde auch angetragen, dass der Aufschraubdorn 1 jeweils aus einer ersten Seite A der Bauteile 6 in die Bohrungen 7 eingeführt wird und dann nach Verbindung der Bauteile in Richtung der Seite B daraus entnommen wird, wonach die Schraube 8 in den Bohrungen 7 verbleibt und darauf die Mutter (ggf. mit Unterlegscheibe 11) geschraubt und angezogen wird.

Selbstverständlich können auch mehr als zwei Bauteile 6 auf diese Weise miteinander verbunden werden.

Es ist möglich, dass die Bauteile bei Beginn des Einbringens des ersten Montagedorns 1 bereits aneinander anliegen, sie können aber auch etwas voneinander beabstandet sein.

Dadurch, dass der Montagedorn 1 in die hintereinander liegenden Bohrungen 7 der Bauteile 6 eingeführt und eingeschlagen wird, werden nicht fluchtende hintereinander liegende Bohrungen 7 und weitere Bohrungen 7a zueinander fluchtend ausgerichtet, wodurch die Montage der Bauteile erheblich erleichtert wird.

Der neu entwickelte Aufschraubdorn 1 vereinfacht somit das Zusammenfügen von Bauteilen, welche über eine größere Anzahl von Bohrungen/Durchgangslöchern miteinander verbunden werden sollen, um ein Vielfaches.

Der Aufschraubdorn 1 ersetzt unter anderem Passschrauben der DIN 609 zur Sicherung der Lage von Werkstücken zueinander bei gleitfesten Verbindungen der Kategorie B+C und erhöht die Montageproduktivität enorm, da auch auf Spannstifte in Kombination mit herkömmlichen Schrauben verzichtet werden kann.

Dadurch kann die Montage von großen und komplexen Bauteilen erheblich günstiger und schneller durchgeführt werden.

Eingesetzt wird der Aufschraubdorn zum Ausrichten von zu verbindenden Bauteilen, die aneinander anliegen und eine Vielzahl von Bohrungen aufweisen, die zueinander fluchten sollen, um in die Bohrungen die Schrauben einbringen zu können. Weiterhin wird die in den Aufschraubdorn eingeschraubte Schraube auch mittels des Aufschraubdorns in die zueinander fluchtenden Bohrungen der Bauteile eingebracht.

Die Bauteile können aus Stahl, Aluminium oder anderen Metallen oder auch aus Holz, Kunststoff oder Verbundwerkstoffen bestehen.

Bevorzugt wird die erfindungsgemäße Lösung zur Verbindung von Stahlbauteilen mit einer Vielzahl von Bohrungen eingesetzt.

Vor allem in der Montage von gleitfesten Verbindungen der Kategorie B und C, bei denen auch Kräfte über die Gleitebenen berücksichtigt werden, findet der Aufschraubdorn Anwendung.

### Bezugszeichenliste

- 1: Aufschraubdorn
- 2: Schaft
- 2.1: Innenraum
- 2.2: Stirnseite des Schaftes 2
- 2.3: Innengewinde
- 2.4: Anschlagfläche
- 2.5: Freistich
- 2.6: massiver Bereich
- 2.7: Schlüsselfläche
- 3: Konus
- 4: optimale Einführtiefe
- 5: Markierungen
- 6: Bauteile
- 6.1: plattenförmige Bauteile
- 7: Bohrungen / Durchgangslöcher
- 7a: weiter Bohrungen / Durchgangslöcher
- 8: Schraube
- 8.1: Kopf
- 8.2: Stirnseite der Schraube 2
- 8a: weitere Schrauben
- 9: Stegblech
- 10: Mutter
- 11: Unterlegscheibe
- d: Nenndurchmesser
- d1: kleinster Durchmesser des Konus
- d2: Außendurchmesser des Schaftes
- dr: Innendurchmesser
- L1: Länge des Konus 3
- L2: Länge des Schaftes 2
- L3: Abstand der Schlüsselfläche 2.7 von der Stirnseite 2.2 des Schaftes 2
- L4: Breite der Schlüsselfläche 2.7
- P: Profil
- R: Radius
- SW: Schlüsselweite

## Patentansprüche

1. Aufschraubdorn (1) zur Ausrichtung von miteinander zu verschraubenden Bauteilen (6), die wenigstens zwei hintereinander liegende Bohrungen (7) aufweisen, wobei der Aufschraubdorn (1)
- einen sich über einen ersten Längenbereich erstreckenden Schaft (2), welcher im Wesentlichen zylindrisch ausgebildet ist und
- einen sich an den Schaft (2) anschließenden, über einen zweiten Längenbereich erstreckenden Konus (3)
aufweist,
- wobei der Schaft (2) einen Innenraum (2.1) aufweist, welcher zu einer dem Konus (3) gegenüberliegenden Stirnseite (2.2) des Schaftes (2) hin geöffnet ausgebildet ist und
- wobei der Innenraum (2.1) ausgehend von der Stirnseite (2.2) des Schaftes (2) ein Innengewinde (2.3) aufweist
- und dass der Innenraum (2.1) einen Freistich (2.5) aufweist, welcher direkt angrenzend zu dem Innengewinde (2.3) an dem der Stirnseite (2.2) des Schaftes (2) gegenüberliegenden Ende des Innengewindes (2.3) ausgebildet ist und
- dass eine an den Freistich (2.5) angrenzende Anschlagsfläche (2.4) an einem Boden des Innenraums (2.1) vorhanden ist,
- wobei die Anschlagfläche (2.4) in Richtung zur Stirnseite (2.2) in Form einer Wölbung mit einem Radius (R) ausgebildet ist
und dass
- der Aufschraubdorn (1) mit einer in diesen bis zur Anschlagfläche (2.4) eingeschraubten Schraube (7) in die hintereinander liegenden Bohrungen (7) der Bauteile (6) einbringbar ist,
- wobei die Schraube (8) an der Anschlagfläche (2.4) anliegt und die Wölbung der Anschlagfläche (2.4) mittig zur Schraube (8) ausgerichtet ist,
- wodurch die Schraube (8) über die Wölbung der Anschlagfläche (2.4) und über ihre Stirnseite Kräfte aufnimmt, die in axialer Richtung auf die Schraube (8) ausgeübt werden *und eine Kraftübertragung beim* Einschlagen oder Einpressen *der Schraube (8) auf den Aufschraubdorn (1) ausschließlich über den Radius (R) der Anschlagsfläche (2.4) erfolgt.*

2. Aufschraubdorn nach Anspruch 1, **dadurch gekennzeichnet, dass** dieser mittels der Schraube (8) durch die Bohrungen (7) führbar ist und nach vollständigem Hindurchführen von der Schraube (8) abschraubbar ist, wobei die Schraube (8) in den Bohrungen (7) verbleibt.

3. Aufschraubdorn (1) nacheinem der vorgenannten Ansprüche, **dadurch gekennzeichnet, dass** der Aufschraubdorn (1) einen Außendurchmesser (d2) aufweist, der mit einem Durchmesser der Bohrungen (7) in den Bauteilen (6) korrespondiert.

4. Aufschraubdorn (1) nach einem der vorgenannten Ansprüche, **dadurch gekennzeichnet, dass** sich das Innengewinde (2.3) über eine Länge (L1) erstreckt, die wenigstens dem 1,2-fachen eines Durchmessers (d1) des Innengewindes (2.3) entspricht und wobei der Boden des Innenraums (2.1) die Anschlagsfläche (2.4) aufweist.

5. Aufschraubdorn (1) nach einem der vorgenannten Ansprüche, **dadurch gekennzeichnet, dass** der Außendurchmesser (d2) des Schaftes (2) im Bereich des 1,07-fachen bis 1,1-fachen, bevorzugt im Bereich des 1,08-fachen bis 1,09-fachen des Durchmessers (d1) des Innengewindes (2.3) liegt.

6. Aufschraubdorn (1) nach einem der vorgenannten Ansprüche, **dadurch gekennzeichnet, dass** der Schaft (2) einen von dem Innenraum (2.1) beabstandeten massiven Bereich (2.6) aufweist, in welchem der Schaft (2) über seinen gesamten Querschnitt hinweg massiv ausgebildet ist und wobei in dem massiven Bereich (2.6) ein Bereich einer Einführtiefe (4) des Aufschraubdorns (1) angeordnet ist.

7. Aufschraubdorn (1) nach einem der vorgenannten Ansprüche, **dadurch gekennzeichnet, dass** der Aufschraubdorn (1) im Bereich des Konus (3) wenigstens eine Markierung (5) an seiner Außenseite aufweist, welche den Abstand zu dem Bereich der Einführtiefe (4) des Aufschraubdorns (1) anzeigt.

8. Aufschraubdorn (1) nach einem der vorgenannten Ansprüche, **dadurch gekennzeichnet, dass** der Schaft (2) an seiner Außenseite wenigstens eine Schlüsselfläche (2.7) aufweist.

9. Aufschraubdorn (1) nach einem der vorgenannten Ansprüche, **dadurch gekennzeichnet, dass** der Aufschraubdorn (1) aus einem Metall und/oder einer Metalllegierung, bevorzugt aus einer Stahllegierung gefertigt ist.

10. Verfahren zur Ausrichtung und von miteinander zu verschraubenden Bauteilen (6) unter Verwendung von wenigstens einem Aufschraubdorn (1) und einer Schraube (8) nach einem der Ansprüche 1 bis 9, aufweisend die Schritte
a) Einschrauben der Schraube (8) in das Innengewinde des Schaftes (2) des Aufschraubdorns (1) bis zur Anschlagsfläche (2.4) in Form einer Wölbung mit einem Radius (R) des Innenraums (2.1) des Aufschraubdorns (1),
b) Einführen des Aufschraubdorns (1) in hintereinander liegende Bohrungen (7) von wenigstens zwei hintereinanderliegenden Bauteilen (6) durch ein Einschlagen oder Einpressen mittels Krafteinwirkung auf einen Kopf (8.1) der Schraube (8), wobei eine Kraftübertragung beim Einschlagen/Einpressen von der Schraube (8) auf den Aufschraubdorn (1) erfolgt, wobei die Schraube (8) über die Wölbung der Anschlagfläche (2.4) und über ihre Stirnseite Kräfte aufnimmt, die in axialer Richtung auf die Schraube (8) ausgeübt werden und eine Kraftübertragung beim Einschlagen/Einpressen der Schraube (8) auf den Aufschraubdorn (1) ausschließlich über den Radius (R) der Anschlagsfläche (2.4) erfolgt und wobei die wenigstens zwei Bauteile (6) derart ausgerichtet werden, dass deren Bohrungen (7) zueinander fluchten;
c) Verbindung der Bauteile (6) durch Einbringen von weiteren Schrauben (8a) in weitere noch freie Bohrungen (7a) der Bauteile (6) und Anziehen mittels Muttern (10);
d) Weiteres Einführen des Aufschraubdorns (1) so dass der Aufschraubdorn (1) von einer der Einführseite der Bauteile (6) gegenüberliegenden Seite aus entfernt werden kann,
e) Entfernen des Aufschraubdorns (1) durch Abschrauben von der Schraube (8), wobei die Schraube (8) in den Bohrungen (7) verbleibt, Aufschrauben und Anziehen mindestens einer Mutter auf der Schraube (8).

11. Verfahren nach Anspruch 10, **dadurch gekennzeichnet, dass** der Aufschraubdorn (1) gemäß Schritt d) derart weit in Bohrungen (7) der Bauteile (6) eingeführt wird, dass eine an der Außenseite des Schaftes (2) des jeweiligen Aufschraubdorns (1) angeordnete Schlüsselfläche (2.7) vollständig aus diesen Bohrungen (7) ausgetreten ist und Abschrauben des Aufschraubdorns (1) von der Schraube (8) über die Schlüsselfläche (2.7) des Aufschraubdorns (1) und Aufschrauben einer Mutter auf die in diesen Bohrungen (7) verbliebene Schraube (8).

12. Verfahren nach einem der Ansprüche 10 oder 11, **dadurch gekennzeichnet, dass** mindestens zwei Schraubdorne (1) für die Ausrichtung der zu verbindenden Bauteile (6) verwendet werden.

## Claims

1. Screw-on mandrel (1) for aligning components (6) to be screwed together, which have at least two bores (7) arranged one behind the other, wherein the screw-on mandrel (1) comprises
- a shaft (2) extending over a first lengthwise region, which is designed substantially cylindrical in shape and
- a cone (3) adjoining the shaft (2) and extending over a second lengthwise region,
- wherein the shaft (2) has an interior space (2.1) that is formed open toward an end face (2.2) of the shaft (2), and
- wherein the interior space (2.1), starting from the end face (2.2) of the shaft (2), comprises an internal thread (2.3),
- and that the interior space (2.1) has a relief groove (2.5) which is formed directly adjacent to the internal thread (2.3) at the end of the internal thread (2.3) opposite the end face (2.2) of the shaft (2), and
- that a stop surface (2.4) adjacent to the relief groove (2.5) is present at a bottom of the interior space (2.1),
- wherein the stop surface (2.4) is formed in the direction toward the end face (2.2) in the form of a curvature with a radius (R),
and that
- the screw-on mandrel (1), with a screw (8) screwed into it up to the stop surface (2.4), can be introduced into the successively arranged bores (7) of the components,
- wherein the screw (8) abuts against the stop surface (2.4) and the curvature of the stop surface (2.4) is aligned centrally with the screw (8),
- whereby the screw (8) absorbs forces via the curvature of the stop surface (2.4) and via its end face, which forces are exerted in the axial direction on the screw (8), and force transmission to the screw-on mandrel (1) during driving or pressing in of the screw (8) occurs exclusively via the radius (R) of the stop surface (2.4).

2. Screw-on mandrel according to claim 1, **characterized in that** it can be guided through the bores (7) by means of the screw (8) and can be unscrewed from the screw (8) after complete passage, wherein the screw (8) remains in the bores (7).

3. Screw-on mandrel (1) according to one of the preceding claims, **characterized in that** the screw-on mandrel (1) has an outer diameter (d2) that corresponds to a diameter of the bores (7) in the components (6).

4. Screw-on mandrel (1) according to one of the preceding claims, **characterized in that** the internal thread (2.3) extends over a length (L1) that is at least 1.2 times a diameter (d1) of the internal thread (2.3), and wherein the bottom of the interior space (2.1) comprises the stop surface (2.4).

5. Screw-on mandrel (1) according to one of the preceding claims, **characterized in that** the outer diameter (d2) of the shaft (2) lies in the range of 1.07 to 1.1 times, preferably in the range of 1.08 to 1.09 times, the diameter (d1) of the internal thread (2.3).

6. Screw-on mandrel (1) according to one of the preceding claims, **characterized in that** the shaft (2) has a solid region (2.6) spaced apart from the interior space (2.1), in which the shaft (2) is formed as a solid over its entire cross-section, and wherein, within the solid region (2.6), an insertion depth region (4) of the screw-on mandrel (1) is arranged.

7. Screw-on mandrel (1) according to one of the preceding claims, **characterized in that** the screw-on mandrel (1) has at least one marking (5) on its outer surface in the region of the cone (3), which indicates the distance to the insertion depth region (4) of the screw-on mandrel (1).

8. Screw-on mandrel (1) according to one of the preceding claims, **characterized in that** the shaft (2) has at least one spanner flat (2.7) on its outer surface.

9. Screw-on mandrel (1) according to one of the preceding claims, **characterized in that** the screw-on mandrel (1) is made of a metal and/or a metal alloy, preferably a steel alloy.

10. Method for aligning components (6) to be screwed together using at least one screw-on mandrel (1) and a screw (8) according to one of claims 1 to 9, comprising the steps of
a. screwing the screw (8) into the internal thread of the shaft (2) of the screw-on mandrel (1) up to the stop surface (2.4) in the form of a curvature with a radius (R) of the interior space (2.1) of the screw-on mandrel (1),
b. inserting the screw-on mandrel (1) into successively arranged bores (7) of at least two successively arranged components (6) by driving or pressing it in by applying force to a head (8.1) of the screw (8), wherein force is transmitted from the screw (8) to the screw-on mandrel (1) during driving/pressing, wherein the screw (8) absorbs forces via the curvature of the stop surface (2.4) and via its end face, which forces are exerted in the axial direction on the screw (8), and force transmission during driving/ pressing of the screw (8) onto the screw-on mandrel (1) takes place exclusively via the radius (R) of the stop surface (2.4), and wherein the at least two components (6) are aligned such that their bores (7) are in alignment with one another;
c. connecting the components (6) by inserting additional screws (8a) into further, still-empty bores (7a) in the components (6) and tightening them with nuts (10);
d. further insertion of the screw-on mandrel (1) so that the screw-on mandrel (1) can be removed from a side opposite the insertion side of the components (6),
e. removing the screw-on mandrel (1) by unscrewing it from the screw (8), wherein the screw (8) remains in the bores (7), and screwing on and tightening at least one nut onto the screw (8).

11. Method according to claim 10, **characterized in that**, according to step d), the screw-on mandrel (1) is inserted into the bores (7) of the components (6) to such an extent that a spanner flat (2.7), which is arranged on the outer side of the shaft (2) of the respective screw-on mandrel (1), has completely exited these bores (7), and unscrewing the screw-on mandrel (1) from the screw (8) via the spanner flat (2.7) of the screw-on mandrel (1) and screwing a nut onto the screw (8) remaining in these bores (7).

12. Method according to one of claims 10 or 11, **characterized in that** at least two screw-on mandrels (1) are used for aligning the components (6) to be joined.

## Revendications

1. Mandrin de vissage (1) pour l'orientation de pièces (6) devant être vissées ensemble qui présentent au moins deux trous percés (7) situés l'un derrière l'autre, lequel mandrin de vissage (1) comporte
- un corps (2) qui s'étend sur une première région de longueur et qui a une forme sensiblement cylindrique et
- un cône (3) qui fait suite au corps (2) et s'étend sur une deuxième région de longueur,
- dans lequel le corps (2) présente un espace intérieur (2.1) qui est ouvert vers une face d'extrémité (2.2) du corps (2) opposée au cône (3) et
- dans lequel l'espace intérieur (2.1) présente un filetage intérieur (2.3) à partir de la face d'extrémité (2.2) du corps (2)
- et dans lequel l'espace intérieur (2.1) comporte un dégagement (2.5) qui est directement contigu du filetage intérieur (2.3) à l'extrémité du filetage intérieur (2.3) tournée vers la face d'extrémité (2.2) du corps (2) et
- dans lequel une surface de butée (2.4) limitrophe du dégagement (2.5) est présente sur un fond de l'espace intérieur (2.1),
- la surface de butée (2.4) étant conformée en direction de la face d'extrémité (2.2) comme un bombement ayant un rayon (R),
et dans lequel
- le mandrin de vissage (1) peut être introduit avec une vis (8) vissée dedans jusqu'à la surface de butée (2.4) dans les trous percés (7) situés l'un derrière l'autre des pièces (6),
- la vis (8) reposant sur la surface de butée (2.4) et le bombement de la surface de butée (2.4) étant orienté au milieu vers la vis (8),
- de sorte que la vis (8) absorbe via le bombement de la surface de butée (2.4) et via sa face d'extrémité des forces qui sont exercées dans le sens axial sur la vis (8) et une transmission de force lors de l'enfoncement au marteau ou à la presse de la vis (8) sur le mandrin de vissage (1) passe exclusivement par le rayon (R) de la surface de butée (2.4).

2. Mandrin de vissage selon la revendication 1, **caractérisé en ce qu'**il peut être guidé à travers les trous percés (7) au moyen de la vis (8) et dévissé de la vis (8) après avoir complètement traversé, tandis que la vis (8) reste dans les trous percés (7).

3. Mandrin de vissage (1) selon l'une des revendications précédentes, **caractérisé en ce que** le mandrin de vissage (1) présente un diamètre extérieur (d2) qui correspond à un diamètre des trous percés (7) des pièces (6).

4. Mandrin de vissage (1) selon l'une des revendications précédentes, **caractérisé en ce que** le filetage intérieur (2.3) s'étend sur une longueur (L1) qui correspond au moins à 1,2 fois un diamètre (d1) du filetage intérieur (2.3) et dans lequel le fond de l'espace intérieur (2.1) présente la surface de butée (2.4).

5. Mandrin de vissage (1) selon l'une des revendications précédentes, **caractérisé en ce que** le diamètre extérieur (d2) du corps (2) se situe entre 1,07 fois et 1,1 fois, de préférence entre 1,08 fois et 1,09 fois, le diamètre (d1) du filetage intérieur (2.3).

6. Mandrin de vissage (1) selon l'une des revendications précédentes, **caractérisé en ce que** le corps (2) présente une région pleine (2.6) à distance de l'espace intérieur (2.1), dans laquelle le corps (2) est plein sur toute sa section, et dans lequel une région d'une profondeur d'insertion (4) du mandrin de vissage (1) est disposée dans la région pleine (2.6).

7. Mandrin de vissage (1) selon l'une des revendications précédentes, **caractérisé en ce que** le mandrin de vissage (1) présente dans la région du cône (3) au moins un marquage (5) sur sa face extérieure, qui indique la distance par rapport à la région de la profondeur d'insertion (4) du mandrin de vissage (1).

8. Mandrin de vissage (1) selon l'une des revendications précédentes, **caractérisé en ce que** le corps (2) présente au moins un méplat pour clé (2.7) sur sa face extérieure.

9. Mandrin de vissage (1) selon l'une des revendications précédentes, **caractérisé en ce que** le mandrin de vissage (1) est fait d'un métal et/ou d'un alliage métallique, de préférence d'un alliage d'acier.

10. Procédé pour l'orientation de pièces (6) devant être vissées ensemble à l'aide d'au moins un mandrin de vissage (1) et d'une vis (8) selon l'une des revendications 1 à 9, comprenant les étapes suivantes :
a) vissage de la vis (8) dans le filetage intérieur du corps (2) du mandrin de vissage (1) jusqu'à la surface de butée (2.4) formée par un bombement ayant un rayon (R) de l'espace intérieur (2.1) du mandrin de vissage (1) ;
b) insertion du mandrin de vissage (1) dans des trous percés (7) situés l'un derrière l'autre d'au moins deux pièces (6) situées l'un derrière l'autre par enfoncement au marteau ou à la presse au moyen de l'application de force sur une tête (8.1) de la vis (8), la force étant transmise au mandrin de vissage (1) lors de l'enfoncement au marteau/à la presse de la vis (8), la vis (8) absorbant via le bombement de la surface de butée (2.4) et via sa face d'extrémité des forces exercées dans le sens axial sur la vis (8) et la transmission de la force lors de l'enfoncement au marteau/à la presse de la vis (8) sur le mandrin de vissage (1) passant exclusivement par le rayon (R) de la surface de butée (2.4) et les au moins deux pièces (6) étant orientées de telle manière que leurs trous percés (7) sont alignés l'un sur l'autre ;
c) assemblage des pièces (6) par insertion d'autres vis (8a) dans d'autres trous percés (7a) encore libres des pièces (6) et serrage au moyen d'écrous (10) ;
d) poursuite de l'insertion du mandrin de vissage (1) de telle sorte que le mandrin de vissage (1) puisse être retiré par un côté opposé au côté d'insertion des pièces (6) ;
e) retrait du mandrin de vissage (1) en le dévissant de la vis (8), la vis (8) restant dans les trous percés (7), et vissage et serrage d'au moins un écrou sur la vis (8).

11. Procédé selon la revendication 10, **caractérisé en ce que** le mandrin de vissage (1) est inséré, selon l'étape d), suffisamment loin dans les trous percés (7) des pièces (6) pour qu'un méplat pour clé (2.7) disposé sur la face extérieure du corps (2) du mandrin de vissage (1) en question sorte complètement de ces trous percés (7), et le mandrin de vissage (1) est dévissé de la vis (8) à l'aide du méplat pour clé (2.7) du mandrin de vissage (1) et un écrou est vissé sur la vis (8) restée dans ces trous percés (7).

12. Procédé selon l'une des revendications 10 ou 11, **caractérisé en ce qu'**au moins deux mandrins de vissage (1) sont utilisés pour orienter les pièces (6) à assembler.
